# EUROPEAN PATENT APPLICATION

(11) **EP 1 632 873 A2**
(43) Date of publication of application: **08.03.2006**
(21) Application number: 05076985.0
(22) Date of filing: 29.08.2005
(51) Int. Cl.: G06F 17/30, H04B 1/16

(54) **Metadata-based data storage in digital radio system**

(30) Priority: 01.09.2004 US 931761
(71) Applicant: Delphi Technologies, Inc., Troy, MI 48007 (US)
(72) Inventor: Walker, Glenn A., Greentown, IN 46936 (US); Bolduc, Timothy D., Westfield, IN 46074 (US); Welk, Douglas L., Rossville, IN 46065 (US)
(74) Representative: Denton, Michael John

(57) **Abstract**

A satellite-based digital audio radio (SDAR) receiver buffers an audio or video data stream and obtains metadata relating to the content of the data stream either during or after the transmission of the data stream in SDAR services in which *a priori* information is unavailable. Based on the metadata and on a selection criterion, the receiver selectively stores portions of the data stream for subsequent use. Thus, the SDAR receiver may provide a user with functionality approximating "content on demand" capabilities of other streamed data services without the use of *a priori* information that is unavailable in some SDAR services.

## Description

### TECHNICAL FIELD

The present invention relates generally to communication services. More particularly, the present invention relates to digital radio services.

### BACKGROUND OF THE INVENTION

The vast majority of vehicles currently in use incorporate vehicle communication systems for receiving or transmitting signals. For example, vehicle audio systems provide information and entertainment to many motorists daily. These audio systems typically include an AM/FM radio receiver that receives radio frequency (RF) signals. These RF signals are then processed and rendered as audio output.

Some vehicle audio systems are configured to take advantage of satellite-based digital audio radio (SDAR) services that offer digital radio service covering a large geographic area, such as North America. By contrast, AM and FM broadcast radio signals can reach a relatively limited geographic area, such as a metropolitan area. SDAR service providers typically transmit digital radio service via either geosynchronous orbit satellites or highly elliptical orbit satellites that receive uplinked programming. These satellites broadcast the programming directly to digital radios that subscribe to the service. Subscribing digital radios are typically located in vehicles, but can also be located in homes and other fixed locations. In addition, some subscribing digital radios are portable units that can be used by subscribers during such activities as exercising. SDAR systems typically employ terrestrial, or ground-based, repeaters in addition to satellite-based transmitters to provide a clean and uninterrupted radio signal broadcast in certain areas susceptible to satellite signal blockage. Each vehicle subscribing to the digital service generally includes a digital radio having a receiver and a pair of antennas for receiving the satellite and terrestrial signal broadcasts.

Some SDAR service providers offer encrypted data services, such as streaming audio or video programming, broadcast over multiple channels. Such data services can deliver content of diverse genres and originating from diverse artists. Of this broad variety of content, many users tend to prefer particular genres and artists.

Other techniques for transmitting streaming audio and video programming, such as the Internet, allow users to select the content they wish to receive. For example, websites that offer streaming audio often allow users to select particular songs to receive. This capability is known as content on demand. Content on demand can be implemented, for example, by sending *a priori* information about the content before the content is transmitted. Users can then selectively record content using recordable media, such as audio cassettes, compact discs (CDs), and videocassettes. As another example, users can selectively record video content using personal video recorders (PVRs), which store video data on a fixed disk drive. These techniques implement content on demand well when the service provider provides *a priori* information about the content and time of delivery.

In some systems, however, the service provider does not send *a priori* information about content to be broadcast. For example, SDAR service providers are restricted from transmitting *a priori* information. Accordingly, content on demand techniques that rely on *a priori* information cannot be implemented in systems, such as SDAR services, in which the service provider cannot send *a priori* information.

### SUMMARY OF THE INVENTION

According to various example embodiments of the present invention, a satellite-based digital audio radio (SDAR) receiver is configured to buffer an audio or video data stream. The receiver obtains metadata relating to the content of the data stream either during or after the transmission of the data stream in SDAR services in which *a priori* information is unavailable. In services in which *a priori* information is available, the receiver obtains the metadata before the transmission of the data stream. Based on the metadata and on a selection criterion, the receiver selectively stores portions of the data stream for subsequent use.

One embodiment of the invention is directed to a method to selectively store data in a communication device. A data stream is received in the communication device. The communication device also receives metadata related to the data stream. The data stream is stored as buffered data. A portion of the buffered data is selected as a function of the metadata and a selection criterion. The selected portion of the buffered data is stored. This method may be embodied in processor-readable media.

In another embodiment, a communication device operable in a satellite-based digital audio radio (SDAR) system includes an antenna configured to receive a signal from an SDAR service provider. A channel decoder is operatively coupled to the antenna and is configured to generate a data stream as a function of the received signal. A memory arrangement is operatively coupled to the channel decoder and is configured to buffer the data stream. A processor-based subsystem is operatively coupled to the memory arrangement and the channel decoder. The processor-based subsystem is configured to receive metadata related to the data stream. The processor-based subsystem is further configured to select a portion of the buffered data as a function of the metadata and a selection criterion. The selected portion of the buffered data is stored using the memory arrangement.

Various embodiments may provide certain advantages. For instance, various embodiments may provide users with functionality that approximates the content on demand capabilities of other streamed data services without the use of *a priori* information that is unavailable in some SDAR and similar services. As a result, users do not need to change channels to locate content that is compatible with their preferences. In vehicle-based systems, safety may be enhanced by obviating the motivation to change channels, eliminating a potential source of driver distraction.

Additional objects, advantages, and features of the present invention will become apparent from the following description and the claims that follow, considered in conjunction with the accompanying drawings.

### BRIEF DESCRIPTION OF THE DRAWINGS

Figure 1 illustrates an example satellite-based digital audio radio (SDAR) system.
Figure 2 is a block diagram illustrating an example SDAR receiver according to an example embodiment.
Figure 3 is a flow diagram illustrating an example method to selectively store data in a communication device according to another embodiment.

### DESCRIPTION OF THE PREFERRED EMBODIMENTS

Various embodiments may provide users with functionality that approximates "content on demand" capabilities of other streamed data services without the use of *a priori* information that is unavailable in satellite-based digital audio radio (SDAR) and similar services. In particular, an SDAR receiver is configured to buffer an audio or video data stream. The receiver obtains metadata relating to the content of the data stream either during or after the transmission of the data stream in SDAR systems in which *a priori* information is unavailable. In systems in which *a priori* information is available, the receiver may obtain metadata before the transmission of the data stream. Based on the metadata and on a selection criterion, the receiver selectively stores portions of the data stream. A user may subsequently access the stored portions of the data stream, which contains content that matches the selection criterion. As a result, the user does not need to change channels to locate content that is compatible with his or her preferences. In vehicle-based systems, safety may be enhanced by obviating the motivation to change channels, eliminating a potential source of driver distraction.

The following description of various embodiments implemented in a vehicle-based SDAR device is to be construed by way of illustration rather than limitation. This description is not intended to limit the invention or its applications or uses. For example, while various embodiments of the invention are described as being implemented in vehicle-based SDAR device, it will be appreciated that the principles of the invention are applicable to SDAR devices operable in other environments.

In the following description, numerous specific details are set forth in order to provide a thorough understanding of various embodiments of the present invention. It will be apparent to one skilled in the art that the present invention may be practiced without some or all of these specific details. In other instances, well known components and process steps have not been described in detail in order to avoid unnecessarily obscuring the present invention.

The invention may be described in the general context of processor-executable instructions, such as program modules, being executed by a processor. Generally, program modules include routines, programs, objects, components, data structures, etc., that perform particular tasks or implement particular abstract data types. The invention may also be practiced in distributed processing environments in which tasks are performed by remote processing devices that are linked through a communications network or other data transmission medium. In a distributed processing environment, program modules and other data may be located in both local and remote storage media, including memory storage devices.

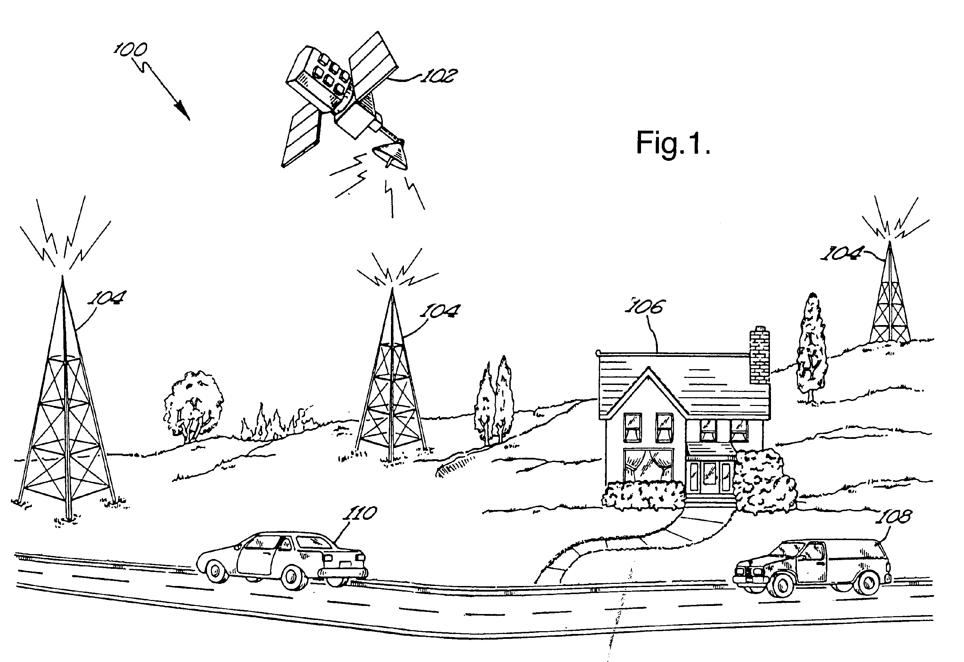

Referring now to the drawings, Figure 1 illustrates an example SDAR system 100 in which a satellite 102 in geosynchronous or highly elliptical orbit around the Earth broadcasts radio frequency (RF) signals via one or more satellite-based transmitters. One or more ground-based, or terrestrial, repeaters 104 may rebroadcast the RF signals received from the satellite 102 to reach areas not covered by the satellite 102 itself, *e.g*., tunnels and other enclosed areas.

A SDAR subscriber uses a SDAR receiver to access SDAR services. The SDAR receiver may be located, for example, in a house 106 or in a vehicle 108. Some SDAR subscribers have multiple receivers. For example, in addition to receivers located in the house 106 and in the vehicle 108, the subscriber may have another receiver located in another vehicle 110. If the SDAR subscriber owns multiple SDAR receivers, the SDAR service provider may allow the SDAR subscriber to transmit the buffered data between the multiple SDAR receivers using, for example, a wireless transmitter. The buffered data may be transmitted using any of a variety of wireless communication protocols, including but not limited to the protocols described within the IEEE 802.11, IEEE 802.15, IEEE 802.16, and IEEE 802.20 specifications.

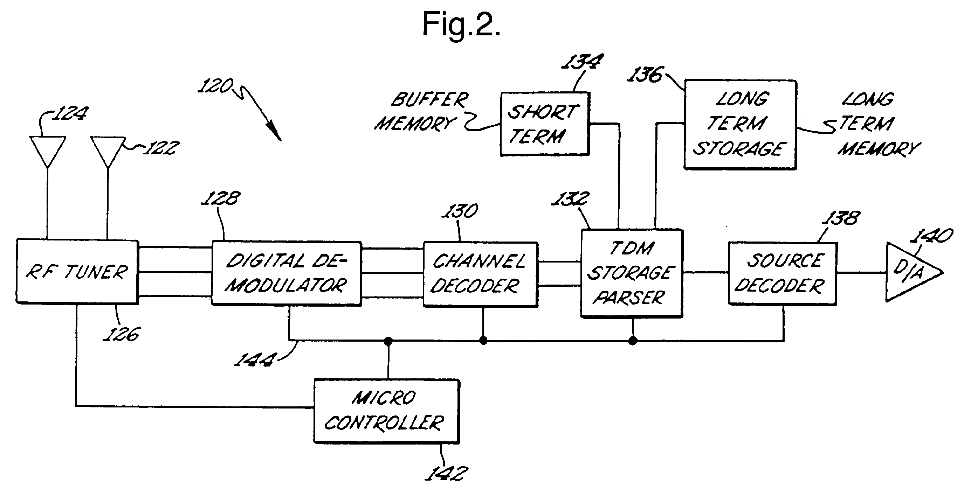

The satellite 102 and the repeaters 104 transmit data as a data stream containing audio content, video content, or both. The SDAR receiver is configured to temporarily store, or buffer, the data stream. As described below in connection with Figure 2, the SDAR receiver buffers decoded channel data before the decoded channel data is decrypted.

In SDAR services in which *a priori* information about the content is unavailable, the satellite 102 and the repeaters 104 transmit metadata relating to the content of the data stream either during or after transmitting the corresponding content in the data stream. For example, if the data stream contains audio content, the satellite 102 and the repeaters 104 may transmit the title and artist of a song either while the song is being transmitted in the data stream or thereafter. Other services may provide *a priori* information about the content. In such services, the satellite 102 and repeaters 104 transmit metadata, for example, slightly before the corresponding content in the data stream.

Based on the metadata and on a selection criterion, the SDAR receiver selectively stores portions of the buffered data stream in a long term memory. A user may enter the selection criterion, for example, via a computer external to the SDAR receiver or via the Internet. The selection criterion may then be communicated to the SDAR receiver using a wired or wireless link. The wireless link may be established according to any of a variety of wireless communication protocols, including but not limited to the protocols described within the IEEE 802.11, IEEE 802.15, IEEE 802.16, and IEEE 802.20 specifications. As an alternative, the SDAR receiver itself may generate the selection criterion based on data use history, *e.g*., types of audio programming to which the user listens most frequently. As another alternative, the SDAR service provider may transmit the selection criterion via the satellite 102 or repeaters 104.

The user may subsequently access the stored portions of the data stream, which contains content that matches the selection criterion. In some embodiments, the stored portions of the data stream are associated with timing information that lags behind current timing information that is associated with data currently transmitted by the satellite 102 or repeaters 104. The timing information may include, for example, the time at which the data was transmitted by the satellite 102 or the repeaters 104, the time at which the data was received in the SDAR receiver, or some other timestamp that indicates a relative timing differential between the stored data and the current data. While not required, the SDAR receiver may be configured to permit use of stored data only once before the SDAR receiver uses the currently transmitted data. Once the SDAR receiver uses the currently transmitted data, a decryption subsystem incorporated in the SDAR receiver receives the current timing information. The decryption subsystem decrypts only data that is associated with timing information that is no earlier than the latest timing information received by the decryption subsystem. When the SDAR receiver is using stored data, the latest timing information is the stored timing information. On the other hand, when the SDAR receiver uses currently transmitted data, the latest timing information is the current timing information. Accordingly, the stored data, which is associated with earlier timing information, becomes unavailable for use once the decryption subsystem receives the current timing information associated with the currently transmitted data.

Figure 2 is a block diagram illustrating an example SDAR receiver 120 according to another embodiment of the invention. The SDAR receiver 120 is associated with a satellite antenna 122 for receiving RF signals broadcast by the satellite 102. In addition, the SDAR receiver 120 may also be associated with a terrestrial antenna 124 for receiving RF signals broadcast by the terrestrial repeaters 104. At any given time, either the satellite antenna 122 or the terrestrial antenna 124 provides a primary signal path, and the other antenna provides a secondary signal path. While not shown in Figure 2, the SDAR receiver 120 may also have additional antennas that provide additional signal paths.

The SDAR receiver 120 is configured to receive, decrypt, and decode digital data signals received via the satellite antenna 122 and the terrestrial antenna 124. An RF tuner 126 has antenna inputs for receiving RF signals received by each of the satellite antenna 122 and the terrestrial antenna 124. The RF tuner 126 selects a frequency bandwidth or channel of digital audio and/or data to pass each of the RF signals within a tuned frequency bandwidth. As shown in Figure 2, the RF tuner generates three outputs: two satellite outputs and a terrestrial output, corresponding respectively to the satellite antenna 122 and the terrestrial antenna 124. An analog-to-digital converter receives the analog signals output by the RF tuner 126 and converts them to digital signals. The analog-to-digital converter can be integral with the RF tuner 126. As an alternative, the analog-to-digital converter can be implemented as part of a digital demodulator 128. The digital demodulator 128 demodulates the output of the RF tuner 126 and generates digital signals as a time division multiplexed (TDM) data stream. A channel decoder 130 processes the time division multiplexed (TDM) data stream to generate channel data.

A TDM storage parsing module 132 receives the TDM data stream, which may include audio or video content, control and other data, or both. The TDM data stream also includes timing information. The TDM storage parsing module 132 is communicatively coupled to a buffer memory 134 and to a long-term memory 136. The buffer memory 134 and the long-term memory 136 may be located in distinct memory devices or in different logical portions of a single memory device. Further, the buffer memory 134 and the long-term memory 136 may incorporate or be configured for use with a removable memory device, such as a flash memory device. In such a configuration, the buffer memory 134 uses the removable memory device to buffer the TDM data stream, and the long-term memory 136 uses the removable memory device to store selected data. In this way, the SDAR receiver 120 can buffer data for one-time use in another SDAR receiver. For example, a home-based SDAR receiver can buffer data for one-time use in a vehicle-based or portable SDAR receiver.

The buffer memory 134 buffers the TDM data stream, including the timing information, from one or more of the channels received by the TDM storage parsing module 132. The buffer memory 134 may be configured as a circular buffer for simultaneously buffering and outputting the data stream. In this way, the buffer memory 134 can output the data stream substantially in real time.

As described above in connection with Figure 1, the satellite 102 and the repeaters 104 transmit metadata relating to the content of the data stream either during or after transmitting the corresponding content in the data stream in systems in which *a priori* metadata is unavailable. Based on the metadata and on a selection criterion, the SDAR receiver selectively stores portions of the buffered data stream in the long term memory 136, for example, by copying the selected portions from the buffer memory to the long term memory 136. A user may enter the selection criterion, for example, via a computer external to the SDAR receiver 120 or via the Internet. The SDAR receiver 120 may then receive the selection criterion via a wired or wireless link. In some embodiments, the SDAR receiver 120 generates the selection criterion based on data use history, *e.g*., types of audio programming to which the user listens most frequently.

The TDM storage parsing module 132 outputs either the buffered data from the buffer memory 134 or the stored data from the long term memory 136 to a source decoder module 138. When the SDAR receiver 120 is used to output data as it is received by the SDAR receiver 120, the TDM storage parsing module 132 outputs the buffered data from the buffer memory 134. On the other hand, to substantially emulate content on demand functionality, the TDM storage parsing module 132 outputs the stored data from the long term memory 136. In this way, the TDM storage parsing module 132 outputs content that matches the selection criterion.

The source decoder module 138 receives the TDM data stream output by the TDM storage parsing module 132 and selects and decodes desired information contained within the TDM data stream. This information may include audio or video information, control, timing, and other data, or both. If the TDM storage parsing module 132 outputs the buffered data, the timing information is buffered timing information that lags behind the current timing information. Similarly, if the TDM storage parsing module 132 outputs the stored data, the timing information is timing information that had previously been buffered, and also lags behind the current timing information. If the memory arrangement outputs the currently transmitted data, the timing information is the current timing information.

While not required, in some embodiments, the source decoder module 138 is configured to decode only data that is associated with timing information that is no earlier than the latest timing information received by the source decoder module 138. If the source decoder module 138 receives the buffered data, including the buffered timing information, the source decoder module 138 will decode the buffered data because the associated timing information is not earlier than the latest timing information, i.e., the buffered timing information, received by the source decoder module 138.

If, on the other hand, the subscriber decides to use the currently transmitted data, the source decoder module 138 decodes the currently transmitted data. The currently transmitted data is associated with timing information that is no earlier than the latest timing information, *i.e*., the current timing information, received by the source decoder module 138. At this point, the latest timing information received by the source decoder module 138 is the current timing information, not the buffered timing information, which lags the current timing information. Accordingly, if the subscriber subsequently tries to use the buffered data, the source decoder module 138 will not decode the buffered data. The buffered data is associated with timing information, *i.e.,* the buffered timing information, that is earlier than the latest timing information received by the source decoder module 138, *i.e.,* the current timing information. In this way, the buffered data becomes unavailable for use when the subscriber switches from using the buffered data to using the currently transmitted data.

When the TDM data stream includes audio content, the source decoder module 138 outputs a digital audio signal to a digital-to-audio converter (DAC) 140. The DAC generates an analog audio output signal for output via an audio system. It will be appreciated by those skilled in the art that the TDM data stream may contain other types of content, *e.g.*, video content, which can be output to appropriate circuitry for output via a display screen or other output devices.

The SDAR receiver 120 also includes a processor-based microcontroller 142 for communicating with and controlling the RF tuner 126, the digital demodulator 128, the channel decoder 130, the TDM storage parsing module 132, and the source decoder module 134 via a data communication bus 144 or other communication path. The microcontroller 142 is typically configured to operate with one or more types of processor readable media. Processor readable media can be any available media that can be accessed by the microcontroller 142 and includes both volatile and nonvolatile media, removable and non-removable media. By way of example, and not limitation, processor readable media may include storage media and communication media. Storage media includes both volatile and nonvolatile, removable and nonremovable media implemented in any method or technology for storage of information such as processor-readable instructions, data structures, program modules, or other data. Storage media includes, but is not limited to, RAM, ROM, EEPROM, flash memory or other memory technology, CD-ROM, digital versatile discs (DVDs) or other optical disc storage, magnetic cassettes, magnetic tape, magnetic disk storage or other magnetic storage devices, or any other medium that can be used to store the desired information and that can be accessed by the microcontroller 142. Communication media typically embodies processor-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also intended to be included within the scope of processor-readable media.

In some implementations, the microcontroller 142 is configured to receive the selection criterion from a computer external to the SDAR receiver 120 or from the Internet via a wired or wireless link. The wireless link may be established using any of a variety of wireless communication protocols, including, but not limited to the protocols described within the IEEE 802.11, IEEE 802.15, IEEE 802.16, and IEEE 802.20 specifications. As another alternative, the microcontroller 142 itself may generate the selection criterion based on data use history, *e.g*., types of audio programming to which the user listens most frequently.

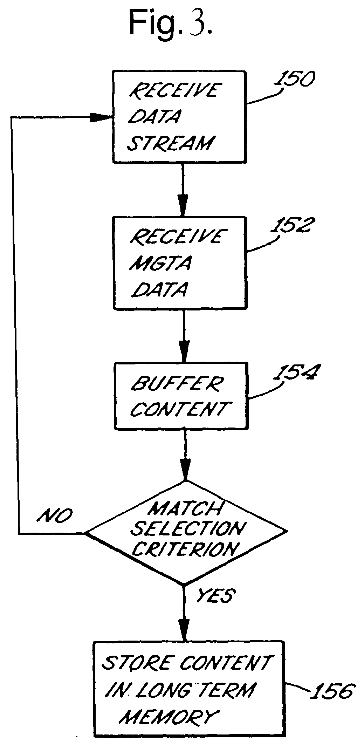

Figure 3 is a flow diagram illustrating an example method for selectively storing data in a communication device, according to another embodiment. As described above in connection with Figure 2, the SDAR receiver 120 receives a data stream transmitted by the SDAR service provider (150). The SDAR receiver 120 also receives metadata relating to the content of the data stream (152). For example, if the data stream contains audio content, the SDAR receiver 120 may receive the title and artist of a song either while the song is being transmitted in the data stream or thereafter. Because SDAR service providers are not permitted to transmit *a priori* metadata, the metadata is received either along with or after the content to which it relates.

The buffer memory 134 then temporarily stores the received data stream as buffered data (154). The buffered data is optionally output as it is buffered. The TDM storage parsing module 132 compares the metadata with the selection criterion entered by the user or generated internally by the SDAR receiver 120. If the metadata matches the selection criterion, the TDM storage parsing module 132 stores the content (156) associated with the metadata in the long-term memory 136.

If, on the other hand, the metadata does not match the selection criterion, the TDM storage parsing module 132 does not store the associated content in the long-term memory 136. The associated content may either be output or temporarily stored in the buffer memory 134 until newly-received data populates the buffer memory 134. Alternatively, the associated content may be removed from the buffer memory 134 immediately to make more buffer capacity available for buffering newly-received data.

If the received timing information is earlier than the latest timing information, i.e., if the received timing information represents a point earlier in time than the latest timing information, the decryption subsystem 134 does not decrypt the received data (158). If the received timing information does not represent a point earlier in time than the latest timing information, the decryption subsystem 134 decrypts the received data (160). In this way, the buffered data is made unavailable for use when the decryption subsystem receives currently transmitted data. The buffered data can only be used when the decryption subsystem has not received currently transmitted data that is more recent than the buffered data.

As demonstrated by the foregoing discussion, various embodiments may provide certain advantages, particularly in the context of data services in which *a priori* information regarding the content of transmitted data is unavailable. By selectively storing portions of a received data stream in a long-term memory based on metadata received with or after the associated content, an SDAR receiver or other communication device may provide subscribers with functionality that approximates "content on demand" without using *a priori* information. As a result, users do not need to change channels to locate content that is compatible with their preferences. In vehicle-based systems, safety may be enhanced by obviating the motivation to change channels, eliminating a potential source of driver distraction.

It will be understood by those who practice the invention and those skilled in the art that various modifications and improvements may be made to the invention without departing from the spirit and scope of the disclosed embodiments. For example, while not required, some embodiments may incorporate multiple source decoders (SDECs) for rendering stored content after real time content has been rendered. The scope of protection afforded is to be determined solely by the claims and by the breadth of interpretation allowed by law.

## Claims

1. A method to selectively store data in a communication device, the method comprising:
receiving a data stream in the communication device;
receiving metadata related to the data stream in the communication device;
storing the data stream as buffered data;
selecting a portion of the buffered data as a function of the metadata and a selection criterion; and
storing the selected portion of the buffered data.

2. The method of claim 1, further comprising deleting a non-selected portion of the buffered data.

3. The method of claim 1, wherein receiving the data stream comprises receiving the data stream via a plurality of channels.

4. The method of claim 1, wherein receiving the metadata comprises receiving the metadata after the data stream is received.

5. The method of claim 1, wherein receiving the metadata comprises receiving the metadata while the data stream is received.

6. The method of claim 1, further comprising receiving the selection criterion from a user.

7. The method of claim 6, wherein receiving the selection criterion comprises receiving the selection criterion via a computer external to the communication device.

8. The method of claim 7, wherein the computer is communicatively coupled to the Internet.

9. The method of claim 7, further comprising receiving the selection criterion via a wired communication link between the computer and the communication device.

10. The method of claim 7, further comprising receiving the selection criterion via a wireless communication link between the computer and the communication device.

11. The method of claim 10, further comprising establishing the wireless communication link according to a wireless communication protocol described within a specification selected from the group consisting of the IEEE 802.11, IEEE 802.15, IEEE 802.16, and IEEE 802.20 specifications.

12. The method of claim 1, further comprising receiving the selection criterion from a service provider.

13. The method of claim 1, further comprising generating the selection criterion as a function of data use history.

14. The method of claim 1, wherein the selection criterion comprises at least one of an artist preference, a song title preference, and a genre preference.

15. The method of claim 1, wherein the communication device comprises a satellite-based digital audio radio (SDAR) receiver.

16. The method of claim 15, wherein the data stream comprises audio data.

17. A communication device operable in a satellite-based digital audio radio (SDAR) system, the communication device of the type having an antenna (122, 124) configured to receive a signal from an SDAR service provider, a channel decoder (130) operatively coupled to the antenna (122, 124) and configured to generate a data stream as a function of the received signal, a memory arrangement (134, 136) operatively coupled to the channel decoder (130) and configured to buffer the data stream, **characterised by**:
a processor-based subsystem (132) operatively coupled to the memory arrangement (134, 136) and the channel decoder (130) and configured to
receive metadata related to the data stream;
select a portion of the buffered data as a function of the metadata and a selection criterion; and
store the selected portion of the buffered data using the memory arrangement (134, 136).

18. The communication device of claim 17, wherein the processor-based subsystem (132) is further configured to delete a non-selected portion of the buffered data from the memory arrangement (134, 136).

19. The communication device of claim 17, wherein the antenna (122, 124) is configured to receive the signal via a plurality of channels.

20. The communication device of claim 17, wherein the processor-based subsystem (132) is configured to receive the metadata after the data stream is received.

21. The communication device of claim 17, wherein the processor-based subsystem (132) is configured to receive the metadata while the data stream is received.

22. The communication device of claim 17, wherein the processor-based subsystem (132) is configured to receive the selection criterion from a user.

23. The communication device of claim 22, wherein the processor-based subsystem (132) is configured to receive the selection criterion via a computer external to the communication device.

24. The communication device of claim 23, wherein the computer is communicatively coupled to the Internet.

25. The communication device of claim 23, wherein the processor-based subsystem (132) is configured to receive the selection criterion via a wired communication link between the computer and the communication device.

26. The communication device of claim 23, wherein the processor-based subsystem (132) is configured to receive the selection criterion via a wireless communication link between the computer and the communication device.

27. The communication device of claim 26, wherein the wireless communication link is established according to a wireless communication protocol described within a specification selected from the group consisting of the IEEE 802.11, IEEE 802.15, IEEE 802.16, and IEEE 802.20 specifications.

28. The communication device of claim 17, wherein the processor-based subsystem (132) is configured to receive the selection criterion from an SDAR service provider.

29. The communication device of claim 17, wherein the processor-based subsystem (132) is configured to generate the selection criterion as a function of data use history.

30. The communication device of claim 17, wherein the selection criterion comprises at least one of an artist preference, a song title preference, and a genre preference.
